# EUROPEAN PATENT SPECIFICATION

(11) **EP 2 248 063 B1**
(45) Date of publication and mention of the grant of the patent: **02.04.2014**
(21) Application number: 09707709.3
(22) Date of filing: 06.02.2009
(51) Int. Cl.: G06F 21/74, G06F 21/53, G06F 11/36

(54) **METHOD AND APPARATUS FOR CONTROLLING SYSTEM ACCESS DURING PROTECTED MODES OF OPERATION**
VERFAHREN UND VORRICHTUNG FÜR STEUERUNGSSYSTEMZUGANG WÄHREND GESCHÜTZTER BETRIEBSARTEN
PROCÉDÉ ET APPAREIL POUR COMMANDER UN ACCÈS DE SYSTÈME DURANT DES MODES DE FONCTIONNEMENT PROTÉGÉS

(30) Priority: 07.02.2008 US 63925
(43) Date of publication of application: 10.11.2010
(73) Proprietor: Analog Devices, Inc., Norwood, MA 02062-9106 (US)
(72) Inventor: GIORDANO, Philip, P., Bellingham MA 02019 (US); BIEDERWOLF, Scott, D., Austin TX 78733 (US)
(74) Representative: Beck, Simon Antony
(86) International application number: PCT/US2009/000768
(87) International publication number: WO 2009/099647

(56) References cited:
- EP-A- 0 816 970
- EP-A- 1 331 539
- US-A1- 2004 003 321
- US-A1- 2004 153 672
- US-A1- 2006 130 130
- US-B1- 6 622 184

## Description

### BACKGROUND

With the extremely high rate of production and use of integrated circuits and computers and in other types of digital module operations, designers have been increasingly aware that methods for testing and diagnosing the internal structure and operation of integrated chips serves a useful and important function. The desirability of initiating standards for embedding logic circuitry into integrated chips has been proposed and developed by the IEEE committees which have proposed a boundary scan architecture designated IEEE 1149.1. The IEEE standard 1149.1, or "JTAG," was developed to define a standard for testing of electronic circuitry. JTAG, an acronym, originally came from a committee group which was designated as the joint test access group (JTAG) which defined the IEEE standard. JTAG is used for a wide variety of test functions, including testing "internal chip" functions and for testing the chip interconnects on a printed circuit board.

Digital signature authentication provides a means for determining the authenticity of an electronic message, and identifying the messages sender. When using this form of authentication, a message is sent with a digital signature associated with the message. The digital signature is created and verified using public key cryptography (i.e., asymmetric cryptography) techniques. Asymmetric cryptography employs an algorithm using two different but mathematically related keys: a public key and a private key. The private key is used for creating a digital signature or transforming data into a seemingly unintelligible form; the public key verifies a digital signature or returns the message to its original form.

### SUMMARY

Microprocessors may be relied upon to store sensitive and/or confidential information. A processor is described which provides for software development debugging capabilities while at the same time providing security for confidential and/or sensitive information stored on the processor.

According to a first aspect of the present invention there is provided a processor configured to operate in a plurality of modes including a secure mode, the secure mode providing secure access to resources of the processor, the processor comprising:
a memory configured to store messages and firmware code;
an emulating-mode enable register bit configured, using a second message comprising code to be debugged, to indicate one of a first processor state wherein private emulation instructions are to be executed and a second processor state wherein private emulation instructions are to be ignored;
a emulation-mode-override register bit, settable in a first entry into the secure mode using a first message comprising an enable code, configured to indicate whether the emulation-mode enable register bit controls entry of the first processor state or the second processor state upon a second entry into the secure mode; and
a logic unit configured to execute the firmware code to authenticate the second message outside the secure mode and, upon successful authentication of the second message, set the emulation-mode-enable register bit in accordance with the emulation-mode-override register bit and enter the secure mode.

In some embodiments, the processor may operate in one of an open mode, a secure entry mode, and a secure mode. In open mode no security measures are in place except to prevent access to certain registry bits and to prevent access to a private memory area (e.g., where sensitive information may be stored). Secure entry mode may be entered when a request to run secure code on the processor is received and authenticated. In some embodiments, authentication is performed using digital signatures. Once authenticated the secure code may run in secure mode where the private memory area is accessible. The secure code may access the private memory area and have greater access and control over the registry. If authentication fails, however, the state returns to open mode.

According to a second aspect of the present invention there is provided a method of operating a microprocessor, the microprocessor operable in a plurality of modes including a secure mode, the method comprising acts of:
(a) entering the secure mode upon successful authentication of a first message comprising a emulation-enable instruction;
(b) executing the emulation-enable instruction, thereby setting a emulation-mode status;
(c) exiting the secure mode;
(d) re-entering the secure mode upon successful authentication of a second message comprising code to be debugged;
(e) enabling, based on the emulation-mode status, a emulation mode indicating emulation instructions are to be executed; and
(f) executing the emulation instruction.

### BRIEF DESCRIPTION OF DRAWINGS

The invention and embodiments thereof will be better understood when the following detailed description is read in conjunction with the accompanying drawing figures. In the figures, elements are not necessarily drawn to scale. In general, like elements appearing in multiple figures are identified by a like reference designation. In the drawings:
FIG. IA is a block diagram of a microprocessor according to some embodiments;
FIG. IB is a block diagram of an embedded system according to some embodiments;
FIG. 1 C is a block diagram of a host connected to a microprocessor according to some embodiments;
FIG. 1D is a block diagram of a host connected to an embedded system according to some embodiments;
FIG. 2 is a state diagram of a secure state machine according to some embodiments;
FIG. 3A is a flow diagram showing an example digital signature creation process;
FIG. 3B is a flow diagram showing an example digital signature verification process;
FIG. 4 is a method of performing digital signature authentication;
FIG. 5 is a block diagram of a microprocessor according to some embodiments;
FIG. 6A-6C are block diagrams illustrating the fields of registers on a microprocessor according to some embodiments;
FIG. 7 is a block diagram of a microprocessor according to some embodiments; and
FIG. 8 is a of method for executing authenticated code in secure mode according to some embodiments.

### DETAILED DESCRIPTION

In the field of programmable processors, which have widespread use in many applications in today's world, customers of the suppliers of these processors often develop software to use the processors for particular applications. It is desirable for such software developers to be able to debug their software in the event the software does not execute as expected. Hardware debug tools, such as JTAG, facilitate development and test of application code.

In addition to the desire for the enabling of software debugging, there exists a significant security concern. Often sensitive, confidential, and/or proprietary information of a customer or of a user of a processor may be stored at any time in the memory and/or on the registers of the processor. Often, during use of a software debugging tool, the contents of such memory and registers are accessible to the user of the tool which provides risk of misappropriation. Thus, to ensure security, many programmable processor suppliers attempt to disable debugging capabilities, such as by not connecting pins of a processor chip which would enable the debugging capabilities.

A microprocessor is provided that balances software debugging capabilities and security during certain modes of operation. This balance insures that sensitive, confidential and/or proprietary information is secure.

### Microprocessor 100

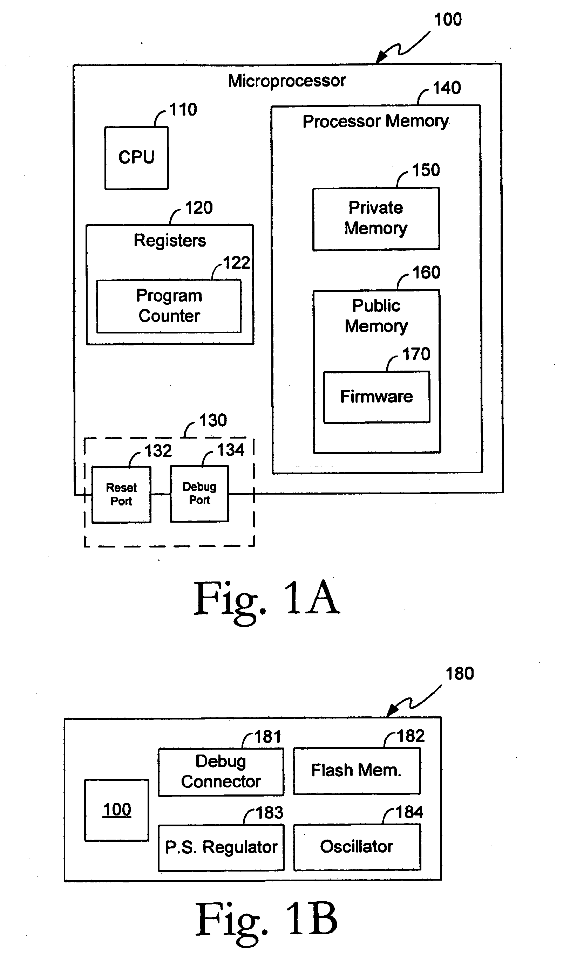

FIG. 1A shows an embodiment of a microprocessor 100. The microprocessor 100 may include a central processing unit (CPU) 110, registers 120, input/output (I/O) ports 130, and memory 140.

CPU 110 is a logic unit for executing instructions on microprocessor 100. Instructions executable by CPU 110 may originate, for example, from software (i.e., programs, code) which may consist of a series of executable instructions.

Memory 140 may be used to store executable code, public key information, and/or any type of digital data. Each memory location may be associated with a memory address. Memory 140 may have one time programmable (OTP) memory, static random access memory (SRAM), read only memory (ROM), dynamic random access memory (DRAM), or any other memory technology or combination of memory technologies.

In some embodiments, memory 140 includes a private memory 150 area and a public memory 160 area. The private memory 150 may only be accessible under certain operating conditions.

The public memory 160 may store firmware 170. Firmware 170 may include authentication software for performing user and/or code authentication. In some embodiments firmware 170 is stored in ROM to prevent alteration of the authentication software instructions.

The registers 120 may store bits of information. The bits may indicate the operating state of microprocessor 100. Registers 120 may be divided into any number of individual registers, each comprising one or more bits. In some embodiments, the registers 120 include a program counter (PC) 122 register that contains a memory address of a next instruction to be executed by CPU 110.

The microprocessor's I/O ports 130 provide input and output functionality for the transfer of information (e.g., a message and digital signature). Each port may be embodied as a pin, jack, wired or wireless receiver, or any other interface technology. I/O ports 130 may include a debug port 134 (e.g., in-circuit emulation (ICE) port), a reset port 132 and one or more additional I/O ports (not shown). The debug port 134 may be used for debugging software executed by microprocessor 100. For example, operation of microprocessor 100 may be observed over debug port 134 by setting break points, single stepping execution, and other debugging procedures.

In some embodiments, debug port 134 supports a JTAG connection to microprocessor 100. JTAG defines a boundary scan architecture to allow the device's input/output (I/O) to be controlled and observed. In addition to boundary scan, JTAG emulation capabilities also can aid in software development to control highly complex functions designed into a device. The emulation capability includes control of the processor, implementing RUN, STOP, SINGLE-STEP, and EXAMINE/MODIFY internal registers, and real-time breakpoints. In addition to the "public" JTAG instructions supported by the IEEE standard (e.g., boundary scan and bypass mode), "private" JTAG instructions may also be supported. Private instructions, for example, may be defined by the manufacturer for a particular microprocessor. Through debug port 134 a user may send public and/or private JTAG instructions to microprocessor 100. JTAG emulation may be supported.

The reset port 132 may be used to provide an external trigger to reset microprocessor 100.

In some embodiments, microprocessor 100 may support direct memory access (DMA) to obviate the need to call the memory through the CPU 110. In some embodiments, DMA may be selectively disabled for portions of memory 140. Which portions of memory 140 are to be DMA enabled/disabled may be controlled, for example, by one of registers 120.

Microprocessor 100 may be part of an embedded system 180 shown in FIG. 1B. An embedded system may consist of additional hardware operably connected to microprocessor to receive outputs and/or provide inputs to the microprocessor. Embedded system 180 is shown as a block diagram with exemplary components such as debug connector 181, flash memory 182, power supply regulator 183, and crystal oscillator 184. These components are purely exemplary and may or may not be present in an embodiment. Microprocessor 100 may be used in combination with any suitable components to form an embedded system 180.

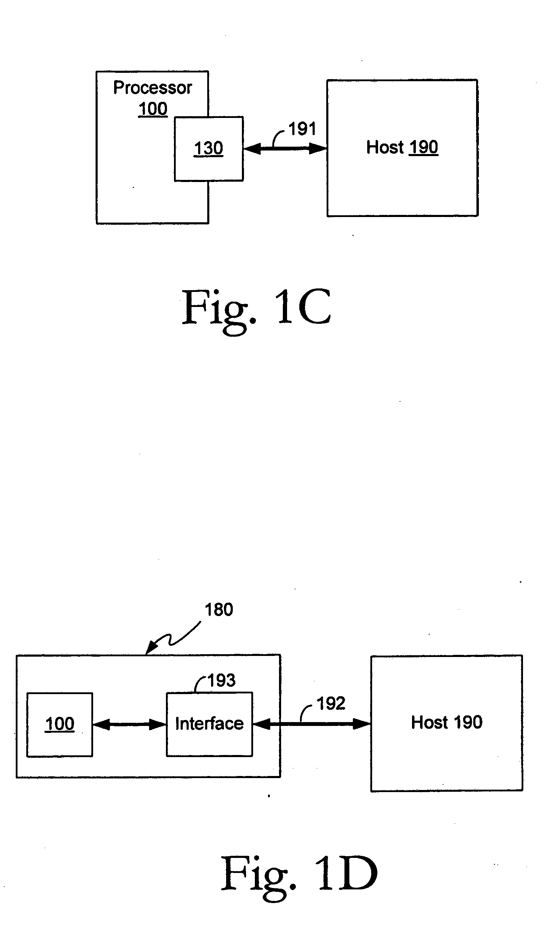

A connection 191 may be established for microprocessor 100 to communicate with a host 190 through one or more I/O ports 130 (e.g., debug port 134) as shown in FIG. 1C. Any suitable device may serve as host 190. For example, host 190 may be a personal computer, laptop computer, PDA, or flash memory device.

A connection 192 may be established between embedded system 180, including microprocessor 100, and host 190 through any suitable interface 193 as shown in FIG. 1D.

Connections 191 and 192 may be implemented using any suitable technology, including wired and wireless technologies.

### Secure State Machine 200

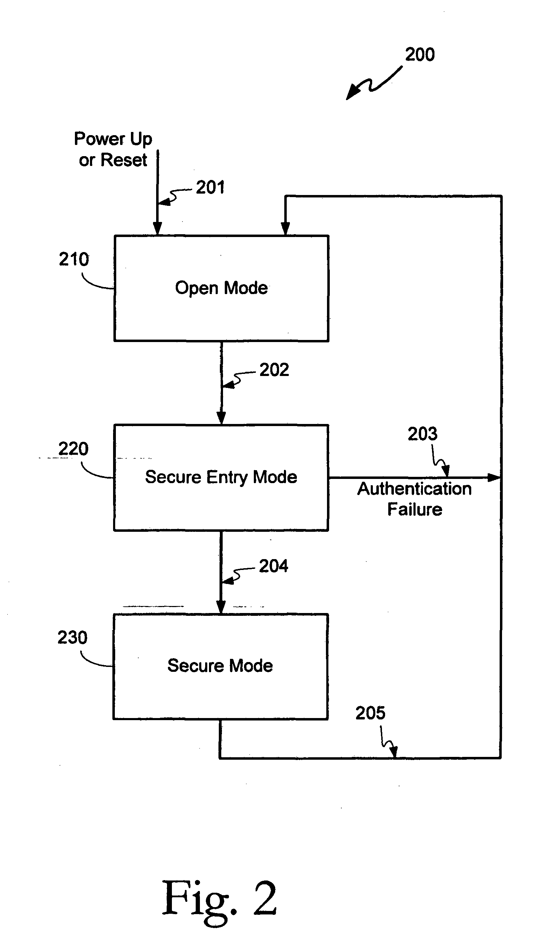

The microprocessor 100 may implement a secure state machine 200 for managing operation. A state diagram of secure state machine 200 according to some embodiments is shown in FIG. 2. Secure state machine 200 may consist of operating modes and transition paths between the operating modes. Each operating mode may have associated therewith different access privileges and security features, while each transition may define a relationship between the different modes.

Secure state machine 200 may, be implemented in microprocessor 100 through registers 120, memory 140, or in any other suitable way. In the example embodiment shown in FIG. 2, secure state machine 200 may operate in an open mode 210, a secure entry mode 220, and a secure mode 230.

Open mode 210 is the default operating state of the processor in which no restrictions are present except restricted access to private memory 150. In some embodiments read and/or write access may also be prevented to certain register bits within registers 120. Open mode 210 is the default state upon power up of the mircroprocessor 100 and after a reset (path 201). In some embodiments debugging capabilities (e.g., JTAG emulation) are enabled in open mode 210.

In the example embodiment shown in FIG. 2, a secure state machine 200 operating in open mode 210 may only transition into secure entry mode 220 (via transition 202). There is no direct path from open mode 210 into secure mode 230.

The transition from open mode 210 to secure entry mode 220 may be triggered when processor execution is directed to authentication software in firmware 170. In some embodiments, processor execution may be directed to firmware 170 by vectoring the program counter 122 to the first address of the authentication software. Some embodiments require non-maskable interrupts (NMI) also be active. Transitioning into secure entry mode 220 may be triggered, for example, by executed code, user input, or any other suitable means.

In secure entry mode 220, the authentication software in firmware 170 may be executed by CPU 110. The authentication software may determine if secure state machine follows transition 204 to secure mode 220 or transitions 203 back to open mode. In some embodiments the authentication software may include a secure entry service routine (SESR) to make the determination.

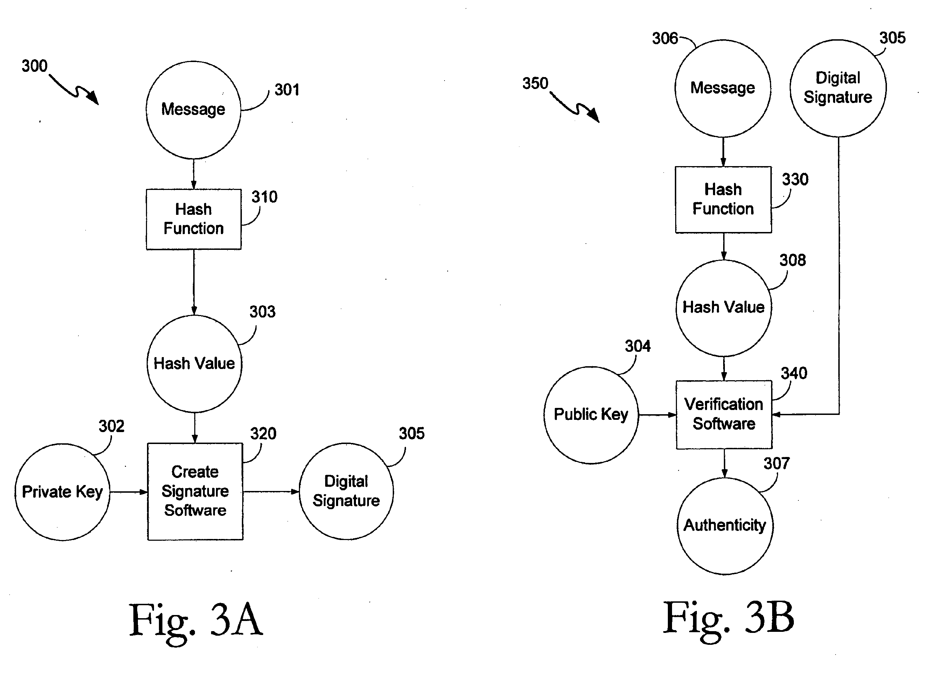

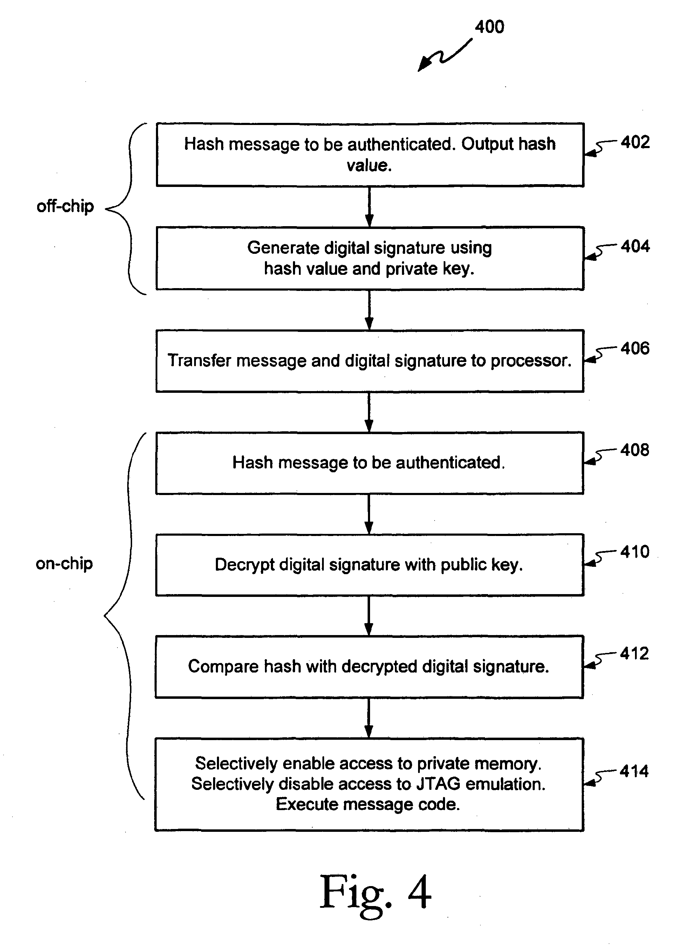

SESR may authenticate a user (e.g., verify the user is permitted access to secure mode), authenticate user code (e.g., verify code to be executed in secure mode is provided by a user permitted access to secure mode), and/or perform any other security process or combination or security processes. In some embodiments, a digital signature authentication process, such as process 350 (FIG. 3B), is performed on a message and a digital signature. A method 400 is subsequently presented, with reference to FIG. 4 for authenticating signed messages.

In secure entry mode 220 the private memory 150 may be inaccessible. In some embodiments, the program counter 122 may be monitored by hardware to ensure that it remains within the address range allocated to firmware 170. In some embodiments, DMA access is not allowed to certain regions of processor memory 140, and JTAG emulation is disabled.

If the authentication fails, transition 203 from secure entry mode 220 into open mode 210 may occur. Authentication may fail, for example, if the user cannot be authenticated, the user code cannot be authenticated, the message and digital signature pair do not agree with a local public key, an error observed in the firmware or if an interrupt must be handled. Any errors caught by the hardware monitor may also result in authentication failure. Example errors may include illegal memory boundary conditions (e.g., program counter 122 vectors outside of the address range of the authorization code), or jumps outside of the firmware range (for example, servicing an interrupt).

The secure state machine 200 may only transition from secure entry mode 220 into secure mode 230 upon successful authentication. If the authentication is successful, the SESR may perform additional steps prior to entering secure mode 230 via transition 204. In some embodiments, interrupts are disabled. Interrupts may be re-enabled by dropping the interrupt level from NMI via SESR arguments or by waiting until the authentication is successful and re-enabling them in the authenticated code after entry into secure mode 230.

Secure mode 230 is a secure operating state of microprocessor 100. JTAG emulation may be disabled by default upon entering secure mode. In some embodiments, authenticated code is allowed unrestricted access to the processor resources including private memory 150, public memory 160, and registers 120. In some embodiments, secure mode 230 allows access (read and write) to the private memory 150 where secure data such as secret keys may be stored. The private memory 150 may be used to store confidential, secret information that only authorized, authenticated user and/or code may access.

Secure mode 230 may be used, for example, to securely run an implementation of any cryptographic cipher in which secret keys are used (e.g., a private key may be stored in private memory 150).

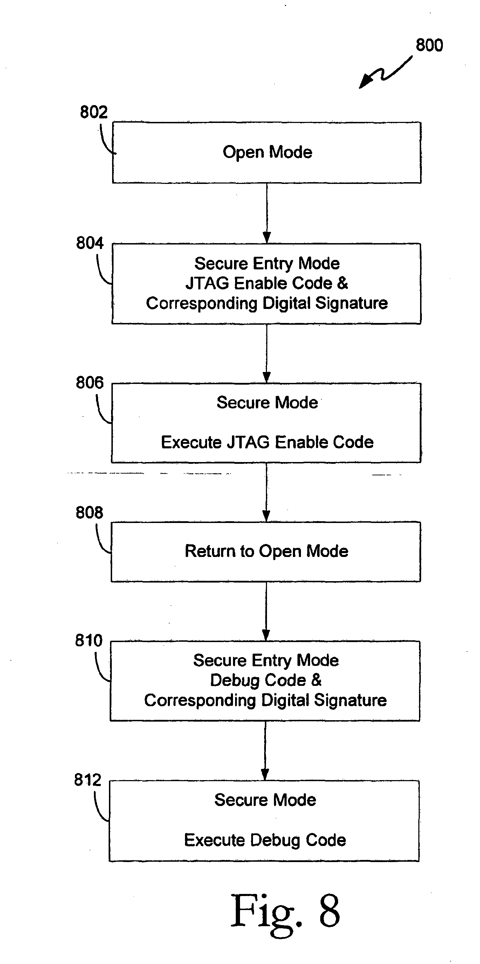

A method 800 for debugging final code (e.g., using JTAG emulation) is subsequently presented with reference to FIG. 8.

Secure state machine 200 may transition 205 from secure mode 230 back into open mode 210. In some embodiments, there may not be a direct path from secure mode 230 into secure entry mode 220.

### Authentication

While in secure entry mode 220, an authentication process may be performed prior to transitioning into secure mode 230. In some embodiments, digital signature authentication is used to determine the authenticity of an electronic message and verify the signer of the message. For example, a message and a digital signature may be transmitted to microprocessor 100 through an I/O port and stored in a memory (e.g., memory 140). When using this form of authentication, the message may be associated with a digital signature created by the signer. The digital signature is specific to the message and the signer so that both may be authenticated.

The digital signature may be created and verified using public key cryptography (i.e., asymmetric cryptography) techniques. Asymmetric cryptography employs an algorithm using two different but mathematically related keys: a public key and a private key. The private key is used for creating a digital signature or transforming data into a seemingly unintelligible form; the public key verifies a digital signature or returns the message to its original form.

The private key may be known only to the signer while the public key is available or distributed to all those verifying the digital signature (e.g., microprocessor 100). Although the keys of the pair are mathematically related, if the asymmetric cryptosystem has been designed and implemented securely, it is computationally infeasible to derive the private key from knowledge of the public key. Thus, although many people may know the public key of a given signer and use it to verify that signer's signatures, they cannot discover that signer's private key and use it to forge digital signatures.

Use of digital signatures usually involves two processes, one performed by the signer and the other by the receiver of the digital signature. In some embodiments, the digital signature is created according to process 300 shown in FIG. 3A. Once the bounds of the message 301 to be signed is defined, a hash function 310 computes a hash value 303 unique to the input message 301. The hash value 303 is a "digital fingerprint" of the message 301. Typically hash value 303 is of a standard length which is usually much smaller than the message but nevertheless substantially unique to it. Hash function 310 may be for example a one-way hashing function such as SHA-1 (secure hashing algorithm). In the case of a secure hash function, sometimes termed a "one-way hash function," it is computationally infeasible to derive the original message 301 from knowledge of its hash value. Hash functions therefore may enable the software for creating digital signatures to operate on smaller and predictable amounts of data, while still providing robust evidentiary correlation to the original message content, thereby efficiently providing assurance that there has been no modification of the message since it was digitally signed.

SHA-1 is one of five cryptographic hash functions designed by the National Security Agency (NSA) and published by the National Institute of Standards and Technology (NIST) as a U.S. Federal Information Processing Standard.

Next, a create signature software 320 transforms the hash value 303 into a digital signature 305 using private key 302. The private key 302 and corresponding public key 304 (FIG. 3B) may be generated using, for example, elliptic curve cryptography (ECC). The digital signature 305 is unique to both the message 301 and the private key 302 used to create it. If ECC is used to generate the private key and public key, an elliptic curve cipher may be used to create the digital signature 305 from the private key 302 and the hash value 303.

Digital signature 305 (a digitally signed hash result of the message) may be attached to message 301 and stored or transmitted with the message 301. However, it may also be sent or stored as a separate data element, so long as it maintains a reliable association with the message 301.

A digital signature verification process 350 is shown in FIG. 1B. Process 350 may be performed, for example, on microprocessor 100. In some embodiments, a software for performing process 350 is stored in firmware 170, or in any suitable memory. For example, the software may be part of the SESR. The process 350 checks received message 306 by reference to the digital signature 305 and a given public key 304, thereby determining whether the digital signature 305 was created for the received message 306 using the private key 302 that corresponds to the referenced public key 304.

Verification of a digital signature is accomplished by computing a new hash value 308 of the received message 306 by means of hash function 330, where hash function 330 is the same hash function used to create the digital signature. Using the public key 304 and the new hash value 308, the verification software 340 checks whether the digital signature 305 was created using private key 302 associated with the public key 304 and whether the newly computed hash value 308 matches the original hash value 303 which was transformed into the digital signature 305 during the digital signature creation process 300. Using the public key 304, the digital signature 305 may be decrypted to the original hash value 303.

The verification software 340 outputs an authenticity 307. The authenticity 307 may confirm the received message 306 is the signer's original message 301 and that the owner of public key's corresponding private key 302 is the true source of the message when the original hash value 303 and the computed hash value 308 match. Successful authentication may permit a subsequent transition into secure mode 230.

If the received message 306 is altered from the original message 301, the alteration will invariably affect the hash value 308, producing a different result when the same hash function is used. The message and digital signature will not check with the public key, and verification will fail. This may lead to a subsequent transition to open mode 210.

### Secure Method 400

Having provided an overview of secure state machine 200, digital signature creation process 300, and digital signature validation process 350, a method 400 for performing a security process is shown with reference to FIG. 4. Method 400 may be performed for digital signature authentication. Method 400 may be performed, for example, when an authorized user wishes to execute code on microprocessor 100 in secure mode 230.

Method 400 includes steps 402 and 404 that may optionally be performed outside of microprocessor 100 ("off-chip"). Steps 408, 410, and 412 correspond to steps that may be performed "on-chip" for digital signature authentication.

In step 402 a one-way hash of the message (e.g., code) to be authenticated is produced using any suitable hashing function. For example, the hashing function may be a one-way hashing function such as SHA-1 (secure hash algorithm). Step 402 may optionally be performed by host 190 (FIGs. 1C and 1D). The message to be authenticated may be executable code. A suitable hashing function may output a hash value.

In step 404 the hash value may be encrypted with a private key, thereby signing the file and completing generation of the digital signature. The hash value may be encrypted in any suitable way. For example, the elliptic curve cryptography (ECC) algorithm may be used.

In step 406 the message and digital signature are transferred to memory accessible by microprocessor 100. For example, the message and digital signature may be stored in processor memory 140. In some embodiments before transfer to microprocessor 100, the message and digital signature may be stored on an external host 190 (FIGs. 1C and 1D) or an onboard memory device (e.g., flash memory 182, FIG. 1B) to facilitate transfer. In some embodiments, the completion of step 406 may cause microprocessor 100 to switch from open mode 210 to secure entry mode 220.

In step 408 the message transferred in step 406 may be hashed using any suitable hashing function. The hashing function may reside in processor memory 140. In some embodiments, the hashing function is part of firm ware 170. In some embodiments the hashing function resides in read only memory. The hashing function may be functionally the same hashing function used in step 402.

In step 410 the digital signature may be decrypted using a public key and a decryption algorithm. The decrypted digital signature may be the hash value generated in step 402. The public key may be stored in public memory 150. Any suitable decryption algorithm may be used. The decryption algorithm may be based on the same algorithm as the encryption algorithm used in step 404. For example, an elliptic curve cipher may be used.

In step 412 the hash value produced in step 408 and the hash value determined by decrypting the digital signature in step 410 may be compared. If the decrypted hash matches the calculated hash, the signature may be valid and the message intact.

In step 414, once the signature has been successfully verified, the secure state machine 200 may enter secure entry mode 230. Upon entry to secure mode 230, access to private memory 140 may be selectively enabled. In some embodiments, a determination as to whether access to the private memory 140 in secure mode 230 is available may be based on a registry field, or any other suitable indicator. Also upon entry into secure mode 230, execution of emulation commands (e.g., private JTAG commands) may be selectively disabled. In some embodiments, a determination as to whether emulation commands are to be executed in secure mode 230 may be based on a registry field, or any other suitable indicator. In some embodiments, the authenticated message may be code executable by CPU 110. In some embodiments, the authenticated code may be executed in secure mode 230.

The digital signatures may be generated off-chip (e.g., on a host computer). A private key may generate a digital signature off the microprocessor 100 ("off-chip") and the corresponding public key validates the signature on the microprocessor 100 ("on-chip"). The private key may be known only to its owner and may not be stored on microprocessor 100. The public key may be made available to anyone and may be stored on microprocessor 100 to authenticate messages from private key owner.

### Microprocessor 500

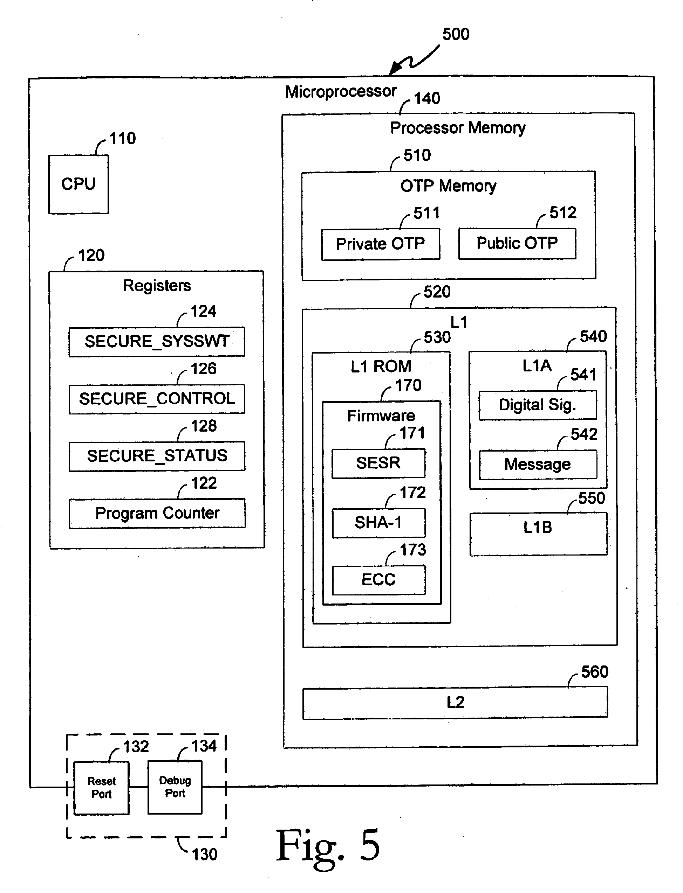

FIG. 5 is a block diagram of an embodiment of a microprocessor 500. Microprocessor 500 is an example embodiment of microprocessor 100 (FIG. 1A). Components sharing the same operational description as the components in microprocessor 100 share a common reference number.

Microprocessor 500 has central processing unit (CPU) 110, registers 120, I/O ports 130, and processor memory 140.

Registers 120 of microprocessor 500 include a PC register 122, system switch register 124, control register 126, and status register 128. Each register may have a set of bits associated therewith. Each bit or a subset of bits may represent a state of registry field. Processor memory 140 may include one time programmable (OTP) memory 510, level one (L1) cache 520, and level two (L2) cache 560.

OTP memory 510 may be an array of non-volatile write-protectable memory that may be programmed only one time. In some embodiments half of the array is public memory (public OTP 512, which may be accessible in any mode) and the other half is private memory (private OTP 511 which may only be accessible in secure mode 230). Private OTP memory 511 of microprocessor 500 may, for example, be an embodiment of private memory (FIG. 1A).

L1 cache 520 may include in L1 read only memory (ROM) 530, L1 data bank A 540, and L1 data bank B 550.

Firmware 170 may be stored in L1 ROM 530. Firmware 170 may include a secure entry service routine (SESR) application programming interface (API) 171 to be used for authentication in secure entry mode 220. Firmware 170 may further include a hashing function such as SHA-1 (secure hashing algorithm) 172 and asymmetric cryptography code such as an elliptic curve cipher 173 code. Storing firmware 170 in read only memory may prevent malicious modification of the firmware code.

In embodiments where digital signature authentication is performed, the digital signature and message may be stored in any suitable memory location. In some embodiments the digital signature and message may be stored in L1 data bank A 540 in storage space 541 and 542, respectively. The message and signature may also or alternatively be stored in L2 560 or any other suitable location.

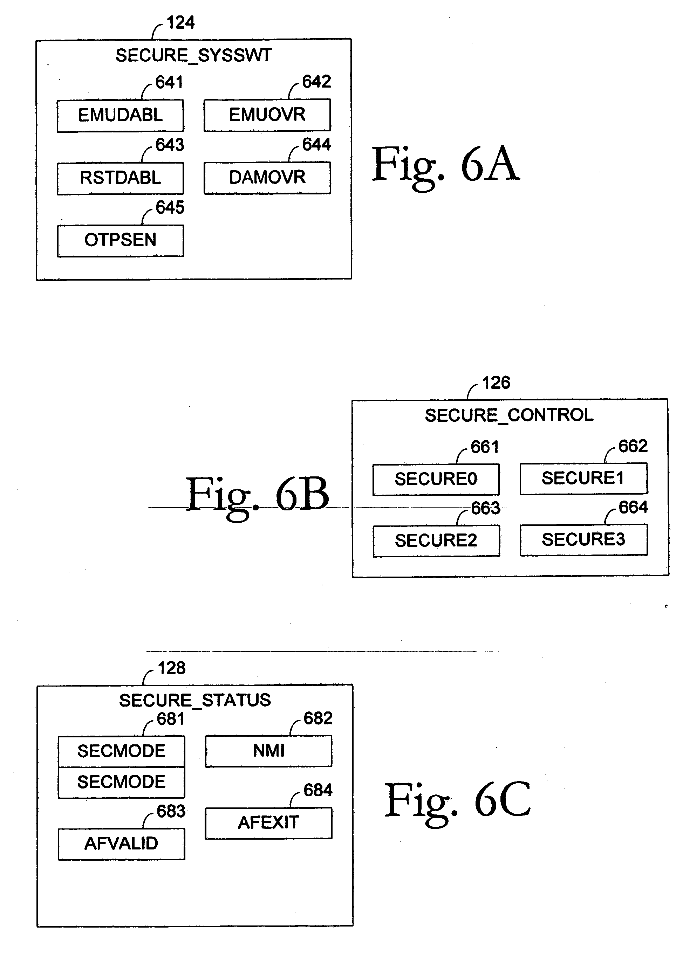

System switch register 124, control register 126, and status register 128 are presented with reference to FIG. 6A, FIG. 6B, and FIG. 6C, respectively. Each field in registers 124, 126, and 128 may take a binary value. In some embodiments a logic "0" represents a "cleared" state, while logic "1" represents a "set" state. Of course, any suitable logic notation may be used, as well as any suitable physical embodiment for storing the state.

### Secure Registers

FIG. 6A is a block diagram showing some of the registry fields present in some embodiments of system switch register 124, "SECURE_SYSSWT." System switch register 124 may comprise fields 641-645, "EMUDABL", "EMUOVR", "RSTDABL", "DMAOVR" and "OTPSEN", respectively.

Field 621, EMUDABL ("emulation disable"), indicates if emulation is disabled. If cleared (e.g., "0"), EMUDABL indicates emulation instructions (e.g., private JTAG emulation instructions) are recognized when executed. If set (e.g., "1"), EMUDABL is asserted and emulation instructions are ignored. Upon entering open mode 210, EMUDABL is cleared. Upon entering secure mode 230, EMUDABL is determined based on EMUOVR.

Field 642, EMUOVR ("emulation override"), indicates if emulation upon entry into secure mode will be enabled or disabled. If cleared, EMUDABL is set upon entry into secure mode. If set, EMUDABL is cleared upon entry into secure mode. EMUOVR may only be set in secure mode.

Field 643, RSTDABL ("reset disable"), determines how external resets are serviced. If cleared, the reset is serviced normally. If set, the reset is redirected to the NMI pin which stores an NMI event. RSTDABL is set upon entering secure mode and cleared upon entering open mode.

Field 644, DMAOVR ("direct memory access override"), indicates if DMA is enabled (e.g., when DMAOVR set) or disabled (e.g., when DMAOVR cleared). Another field (not shown) in the system switch register 124 may specify the restricted memory areas. In some embodiments, DMA may be disabled upon entering open mode (e.g., DMAOVR cleared).

Field 645, OTPSEN ("secrets enable"), determines if private Memory 150 is readable and programmable (e.g., when OTPSEN set) or not accessible (e.g., when OTPSEN cleared). Writable in secured mode only.

FIG. 6B is a block diagram showing some of the registry fields present in some embodiments of control register 126, "SECURE_CONTROL". Control register 126 may comprise fields 661-644, "SECURE0", "SECURE1", "SECURE2", and "SECURE3", respectively.

Field 661, SECURE0, is a write only bit. SECURE0 may only be set in secure entry mode. When SECURE0 is cleared, fields 661-664 (i.e., all SECURE bits in control register 126) are cleared and open mode is entered. Initially when SECURE0 is set, SECURE1 is set. A subsequent set of SECURE0 results in SECURE2 being set. A subsequent set of SECURE0 results in SECURE3 being set.

Fields 662-664, SECURE1, SECURE2, and SECURE3, respectively, are read only bits. Upon a set of SECURE3, secure mode 230 is entered.

FIG. 6C is a block diagram showing some of the registry fields present in some embodiments of status register 128, "SECURE_STATUS". Status register 128 may comprise fields 681-684, "SECMODE", "NMI", "AFVALID", and "AFEXIT", respectively.

Field 681, SECMODE ("secure mode control state") is a two bit read only field that indicates the current state of the secure state machine 200. In some embodiments "00" indicates the secure state machine is in open mode, while "01" and "10" indicate secure entry and secure mode, respectively ("11" being a reserved state).

Field 682, NMI is a read-only bit that reflects the detection of a non-maskable interrupt.

Field 683, AFVALID ("authentication firmware valid") is a read-only bit that reflects the status of authentication. If cleared, authentication has not begun properly or is interrupted. If set, authentication is valid and is progressing properly and uninterrupted.

Field 684, AFEXIT ("authentication firmware exit") is set if an improper exit from authentication firmware is made. For example, secure state machine 200 may exit from secure entry mode back to open mode upon detection of AFEXIT being set.

### Microprocessor 700

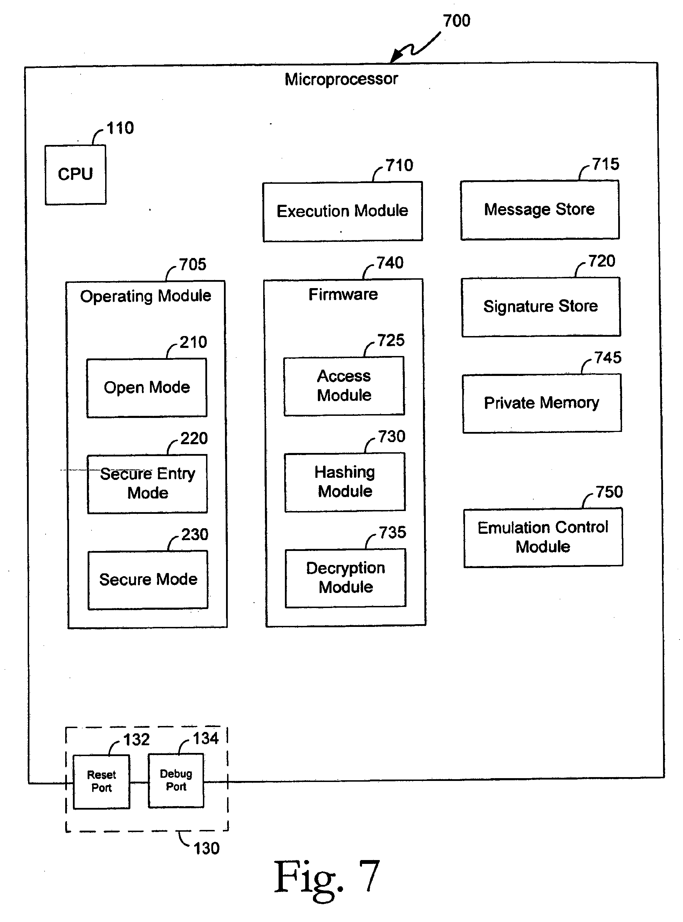

FIG. 7 is a block diagram of a microprocessor 700. Microprocessor 700 is an example embodiment of microprocessor 100 (FIG. 1A). Microprocessor 700 comprises components that may be embodied in hardware, software, or any suitable combination of both. Components sharing the same operational description as the components in microprocessor 100 may share a common reference number. In some embodiments, components of microprocessor 700 may be implemented using any suitable combination of components from microprocessor 200 and/or microprocessor 500.

Microprocessor 700 may have a CPU 110, I/O ports 130, operating module 705, execution module 710, message store 715, signature store 720, access module 725, hashing module 730, decryption module 735, private memory 745, and emulation control module 750. In some embodiments, access module 725, hashing module 730, and decryption module 735 are part of firmware 740.

Operating module 705 enforces the access privileges and security features of a current mode of operation. In some embodiments the modes of operation include an open mode 210, a secure entry mode 220, and a secure mode 230. In some embodiments, the operating module transitions between operating modes according to secure state machine 200 (FIG. 2). In some embodiments operating module may be implemented using memory (e.g., memory 140) and/or registers (e.g., registers 120). For example, the control register 126 may be used to designate entry into secure mode 230, while the SECMODE field 681 in the status register 128 may be used to specify the current operating mode.

Execution module 710 may specify a program to be executed by CPU 110. Execution module, for example, may specify a memory address of a next instruction to be executed by CPU 110. In some embodiments, execution module 710 increments with each successive execution unless instructed to point to a specific memory address. In some embodiments, execution module 710 is implemented as the program counter register 122.

Message store 715 and signature store 720 may store a message to be authenticated and a digital signature of the message, respectively. The message store and signature store may be implemented through memory 140. In some embodiments the message store and signature store are part of a L1 520 and/or L2 560 (FIG. 5).

The secure access module 725 may perform the secure entry service routine (SESR). The secure access module may assess the authenticity of the message and digital signature pair.

The secure access module 725 may call a hashing module 730 and/or an decryption module 735. The call may be made by updating the execution module 710 with an address of the module to be executed.

The hashing module 730 may hash the message and output a hash value. Hashing module 730 may implement the SHA-1 algorithm or any suitable hashing algorithm.

The decryption module 735 may validate the digital signature with the hash value of the message using a public key of an authorized message sender. In some embodiments, the decryption module 735 may validate the message/digital signature pair with a public key using an elliptic curve cipher.

If execution module 710 specifies the secure access module 725 as the program to be executed by CPU 110, the operating module 705 may switch to secure entry mode 220. In some embodiments, operating module 705 operates in open mode 210 before switching to secure entry mode 220.

If the secure access module 725 verifies the authenticity of the message/digital signature pair, the operating module 705 may enter secure mode 230.

In secure mode, private memory area 745 may be read and/or write accessible. The accessibility of private memory area 745 may, for example, be determined by the OTPSEN field 645 in secure mode 230. In some embodiments, read and write commands for private memory area 745 may be aborted/denied in open mode 210 and secure entry mode 220. In some embodiments, private memory area 745 may be at least a portion of a one time programmable (OTP) memory array 510 (FIG. 5).

In some embodiments, an emulation control module 750 determines if emulation commands, for example, received by debug port 134 are to be executed. Emulation control module 750 may be implemented through EMUDABL field 641 and EMUOVR field 642 in system switch register 124. In some embodiments, the emulation commands may be JTAG emulation commands.

If the secure access module determines the message and digital signature pair are not authentic or aborts the authentication process for any reason (for example, to service an interrupt), the operating module 705 may switch from secure entry mode 220 to open mode 210. In some embodiments, secure access module 725 clears AFVALID, field 683 of the status register 128, when the authentication process has failed. A cleared AFVALID may indicate to operating module 705 to return to open mode 210.

Secure access module 725, hashing module 730, and encryption module 735 may be part of firmware 740. In some embodiments, firmware 740 is a read only memory (ROM) to prevent tampering with these modules.

### Method 800: Example Operation for Debugging Final Code

A user may wish to test code in its final version in secure mode. The testing may require that emulation be enabled so that the execution may be closely observed by the user. Method 800, shown in FIG. 8, may be performed to test a final version of code in secure mode, for example.

Initially at step 802, microprocessor 100 is assumed to be in open mode 210. In some embodiments, emulation (e.g., JTAG emulation) may be disabled by default upon entering secure mode. To ensure emulation is available in secure mode, EMUOVR field 642 in the system switch register 124 may be set.

To set EMUOVR, step 804, a user may upload and authenticate code with a corresponding digital signature. The code (e.g., "JTAG enable code") comprises an instruction to set EMUOVR.

Once the code is authenticated, in step 806 the code to set EMUOVR is executed.

Having executed set EMUOVR, the microprocessor 100 returns to open mode at step 808. The user may upload the final code to be debugged along with the corresponding digital signature.

In step 810, the microprocessor enters secure entry mode and authenticates the final code and corresponding digital signature.

In step 812, the microprocessor enters secure mode. Because EMUOVR was previously set the EMUDABL field 641 is cleared. The authenticated final code may now be executed in secure mode. The user may use emulation (e.g., JTAG emulation) to observe and control execution of the code in its final form.

It is noted that while the final code may have been appended to an instruction to clear EMUDABL, thus eliminating the extra entry into secure mode (steps 804, 806, and 808), this would, in fact, vitiate the final code. The method 800 enables the user to debug the actual final code in secure mode.

### Further Embodiments

Having thus described at least one illustrative embodiment of the invention, various alterations, modifications, and improvements will readily occur to those skilled in the art.

In some embodiments, the message (e.g., message 301, FIGs. 3A) may itself be encrypted using any suitable encryption algorithm. In some embodiments, encryption of the message and use of a digital signature may insure both privacy and authenticity. A symmetric-key algorithm may be used for encryption. Example encryption standards that may be used for encryption include the advanced encryption standard (AES), data encryption standard (DES). In some embodiments, an encrypted message is first authenticated providing access to secure mode 230 (FIG. 2) and private memory 150 (FIG. 1A). The private memory may store a shared key needed for decryption.

In some embodiments, multiple public keys may be stored on microprocessor 100 (if for example, multiple users are permitted to run authenticated code in secure mode). Microprocessor 100 may perform the authentication process with each public key until the message authenticates or until each of the public keys are tried unsuccessfully. In some embodiments, the message/signature pair may indicate which public key to use.

Microprocessor 100 may be embodied as a system-on-a-chip, computer-on-a-chip, a microcontroller, and the like. In some embodiments microprocessor 100 is an Analog Devices Blackfin processor®.

Microprocessor 100 may be compatible with any hardware and/or software debug tool. Debug and/or emulation commands may be received via debug port 134. Microprocessor 100 may be compatible with the IEEE 1149.1 J-TAG standard. In some embodiments, JTAG commands are received through debug port 134.

In some embodiments, the size and/or location of the private memory area may be selectable.

The SECURE_SYSSWT register may be a 32 bit register with memory mapped address 0xFFC04320. Table 1 provides summary of the function of each bit in the register according to some embodiments.

**Table 1.**

| Bit Position | Bit Name | Bit Description |
|---|---|---|
| | | Reset = 0x0000 |
| | | Secure Entry Mode = 0x000704d9 |
| | | Secured Mode = Ox000704db |
| 0 | EMUDABL | Emulation Disable |
| | | Upon secure entry mode EMUDABL's setting is based on the previous state of EMUOVR. Upon reentering open mode EMUDABL is cleared. This bit is always read accessible. This bit is write accessible only in secure mode. |
| | | 0 - Private JTAG emulation instructions will be recognized and executed. Once this bit has been cleared while in secure mode it will not be set upon secure entry mode. This condition will remain until reset at which time it will be cleared. This feature may be used in security debug. |
| | | 1 - Private JTAG emulation instructions will be ignored. Standard emulation commands such as bypass will be allowed. |
| 1 | RSTDABL | Reset Disable |
| | | This bit is not effected upon secure entry mode. This bit is set upon entering secure mode. Upon reentering open mode RSTDABL is cleared. This bit is always read accessible. This bit is write accessible only in secure mode. |
| | | 0 - External resets are generated and serviced normally. |
| | | 1 - External resets are redirected to the NMI pin. This avoids circumventing memory clean operations. |
| 4:2 | L11DABL | L1 Instruction Memory Disable |
| | | upon secure entry mode L11DABL is set to 0x6. Upon reentering open mode L11DABL is cleared. These bits are always read accessible. These bits are write accessible only in secured mode. In the event DMA |
| | | access is performed to a restricted memory area a DMA memory access error will occur resulting in a DMA_ERR interrupt and a clearing of DMA_RUN. |
| | | 000 - All DMA accesses are allowed to L1 Instruction areas. |
| | | 001 - 1KB of memory (OxFFA00000 - OxFFA003FF) has restricted non core access |
| | | 010 - 2KB of memory (OxFFA00000 - OxFFA007FF) has restricted non core access |
| | | 011 - 4KB of memory (OxFFA00000 - OxFFA00FFF) has restricted non core access |
| | | 100 - 8KB of memory (OxFFA00000 - OxFFA01FFF) has restricted non core access |
| | | 101 - 16KB of memory (OxFFA00000-OxFFA03FFF) has restricted non core access |
| | | 110 - 32KB of memory (OxFFA00000-OxFFA07FFF) has restricted DMA access. This is the initial setting upon entering secure entry mode. |
| | | 111- Reserved |
| 7:5 | L1DADABL | L1 Data Bank A Memory Disable |
| | | Upon secure entry mode L1DADABL is set to 0x6. Upon reentering open mode L1DADABL is cleared. These bits are read accessible in open, secure entry, and secure mode. These bits are write accessible only in secure mode. In the event a DMA access is performed to a restricted memory area a DMA memory access error will occur resulting in a DMA_ERR interrupt and a clearing of DMA_RUN. |
| | | 000 - All DMA accesses are allowed to L1 data bank A areas. |
| | | 01 - I KB of memory (OxFF800000 - OxFF8003FF) has restricted non core access |
| | | 010 - 2KB of memory (OxFF800000 - OxFF8007FF) has restricted non core access |
| | | 011 - 4KB of memory (OxFF800000 - OxFF800FFF) has restricted non core access |
| | | 100 - 8KB of memory (OxFF800000 - OXFF80IFFF) has restricted non core access |
| | | 101 - 16KB of memory (OxFF800000 - OxFF803FFF) has restricted non core access |
| | | 110 - 32KB of memory (OxFF800000 - OxFF807FFF) has restricted DMA access. This is the initial setting upon entering secure entry mode. |
| | | 111 - Reserved |
| 10:8 | L1DBDABL | L1 Data Bank B Memory Disable |
| | | Upon secure entry mode L1DBDABL is set to 0x4 giving L1 Data Bank B 8KB of non core restricted access. Upon reentering open mode L1DBDABL is cleared. These bits are read accessible in open, secure entry, and secure mode. These bits are write accessible only in secure mode. In the event a DMA access is performed to a restricted memory area a DMA memory access error will occur resulting in a DMA_ERR interrupt and a clearing of DMA_RUN. |
| | | 000 - All DMA accesses are allowed to L1 data bank B areas. This is the initial setting upon entering secure entry mode. |
| | | 001 - 1KB of memory (OxFF900000 - OxFF9003FF) has restricted non core access |
| | | 010 - 2KB of memory (OxFF900000 - OxFF9007FF) has restricted non core access |
| | | 011 - 4KB of memory (OxFF900000 - OxFF900FFF) has restricted non core access |
| | | 100 - 8KB of memory (OxFF900000 - OxFF90IFFF) has restricted non core access. This is the initial setting upon entering Secure Entry Mode. |
| | | 101 - 16KB of memory (OxFF900000 - OxFF903FFF) has restricted on core access |
| | | 110 - 32KB of memory (OxFF900000 - OxFF907FFF) has restricted DMA access. |
| | | 111 - Reserved |
| 11 | DMA0OVR | DMA0 Memory Access Override |
| | | Entering secure entry mode or secure mode does not effect this bit. Upon reentering open mode DMAOOVR is cleared. This bit is read accessible in open, secure entry, and secure mode. This bit is write accessible in both secure entry mode and secure mode. |
| | | Controls DMA0 access to L1 Instruction, L1 Data and L2 memory regions. When clear access restrictions are |
| | | based on Memory Disable settings within this register. |
| | | 0 - DMA0 accesses are restricted based on Memory Disable settings. |
| | | 1 - Unrestricted DMA0 accesses are allowed to all memory areas. |
| 12 | DMA1OVR | DMA 1 Memory Access Override |
| | | Entering secure entry mode or secure mode does not effect this bit. Upon reentering open mode DMA1OVR is cleared. This bit is read accessible in open, secure entry, and secure mode. This bit is write accessible in both secure entry mode and secure mode. |
| | | Controls DMA1 access to L1 Instruction, L1 Data and L2 memory regions. When clear access restrictions are based on Memory Disable settings within this register. |
| | | 0 - DMA 1 accesses are restricted based on Memory Disable settings. |
| | | 1 - Unrestricted DMA1 accesses are allowed to all memory areas. |
| 13 | RESERVED | Reserved bit |
| | | This reserved bit always returns a "0" value on a read access. Writing this bit with any value has no effect. |
| 14 | EMUOVR | Emulation Override |
| | | This bit is always read accessible. This bit may be written with a "1" in secured mode only. This bit can be cleared in open mode, secure entry mode and secure mode. Controls the value of EMUDABL upon secure entry mode. |
| | | 0 - Upon secure entry mode the EMUDABL bit will be set. |
| | | 1 - Upon secure entry mode the EMUBABL bit will be cleared. This bit can only be set when EMUDABL (bit-0) is written with a "0" while this bit (bit-14) is written simultaneously written with a "1". |
| 15 | OTPSEN | OTP Secrets Enable |
| | | This bit can be read in all modes but is write accessible in secure mode only. |
| | | 0 - Read and Programming access of the private OTP area is restricted. Accesses will result in an access error (FERROR) |
| | | 1 - Read and Programming access of the private OTP area is allowed. If the corresponding program protection bit for an access has been set, a program access will be protected regardless of this bit's setting |
| 18:16 | L2DABL | L2 Memory Disable |
| | | Upon secure entry mode L2DABL is set to 0x7. Upon reentering open mode L2DABL is cleared. These bits are read accessible in open, secure entry, and secure mode. These bits are write accessible only in secure mode. In the event a DMA access is performed to a restricted memory area a DMA memory access error will occur resulting in a DMA_ERR interrupt and a clearing of DMA_RUN. |
| | | 000 - All DMA accesses are allowed to L2. |
| | | 001 - 1KB of memory (OxFEB00000 - OxFEB003FF) has restricted non core access |
| | | 010 - 2KB of memory (OxFEB00000 - OxFEB007FF) has restricted non core access |
| | | 011 - 4KB of memory (OxFEB00000 - OxFEB00FFF) has restricted non core access |
| | | 100 - 8KB of memory (OxFEB00000 - OxFEB01FFF) has restricted non core access |
| | | 101 - 16KB of memory (OxFEB00000 - OXFEB03FFF) has restricted non core access |
| | | 110 - 32KB of memory (OxFEB00000-OxFEB07FFF) has restricted non core access |
| | | 111 - 64KB of memory (OxFEB00000 - OxFEB0FFFF) has restricted DMA access. This is the initial setting upon entering secure entry mode. |

The SECURE_CONTROL register may be a 16 bit with memory mapped address 0xFFC04324. Table 2 provides summary of the function of each bit in the register according to some embodiments.

**Table 2.**

| Bit Position | Bit Name | Bit Description |
|---|---|---|
| | | Reset = 0x0000 |
| 0 | SECURE0 | SECURE 0 |
| | | A write only bit. A read always returns "0." A "1" value can only be written to SECURE0 when in secure entry mode. The purpose of this control bit is to require 3 successive writes with a value of "1" to SECURE0 in order to enter secure mode. |
| | | 0 - When written with a "0" value, all SECURE bits within this register are cleared and open mode is entered. All SYSSWT bits are cleared with the exception of EMUOVR. If EMUOVR had been set by the user, it will remain set (until RESET is asserted or until it is written with a "0"). |
| | | 1 - Initially when written with a "1" value SECURE1 will be set. With a subsequent "1" written SECURE2 will be set. A subsequent "1" written will set SECURE3. Upon a set of SECURE3 secure mode will be entered. |
| 1 | SECURE1 | SECURE 1 |
| | | This is a read only bit and indicates a successful write of SECURE0 with a data value of "1" |
| | | 0 - SECURE0 has not been written with a "1" value |
| | | 1 - SECURE0 has been written with a "1" value |
| 2 | SECURE2 | SECURE 2 |
| | | This is a read only bit and indicates two successful writes of SECURE0 with a data value of "1" has occurred |
| | | 0 - SECURE0 has not been written with a "1" value while |
| | | SECURE1 was set. |
| | | 1 - SECURE0 has been written with a "1" value for a second time. |
| 3 | SECURE3 | SECURE 3 |
| | | This is a read only bit and indicates three successful writes of SECURE0 with a data value of "1" has occurred. |
| | | 0 - SECURE0 has not been written with a "1" value while SECURE2 was set |
| | | 1 - SECURE0 has been written with a "1" value for a third time. The part is currently in secure mode and the SYSSWT register is writable by authenticated code. |

The SECURE_STATUS register may be a 16 bit register with memory mapped address 0xFFC04328. Table 3 provides summary of the function of each bit in the register according to some embodiments.

**Table 3.**

| Bit Position | Bit Name | Bit Description |
|---|---|---|
| | | Reset = 0x0000 |
| 1:0 | SECMODE | Secured Mode Control State |
| | | Read only bits that reflect the current mode of the secure state machine. |
| | | 00 - Open Mode |
| | | 01 - Secure Entry Mode |
| | | 10 - Secure Mode |
| | | 11 - Reserved |
| 2 | NMI | Non Maskable Interrupt |
| | | A read only bit that reflects the detection of NMI. |
| | | 0 - Currently NMI is not detected. |
| | | 1 - Currently NMI is detected. |
| 3 | AFVALID | Authentication Firmware Valid |
| | | A read only bit that reflects the state of the hardware monitor logic. If execution of authentication has begun properly and has had uninterrupted operation the authentication is considered valid. A valid authentication is required for secure entry mode and secure mode operation. |
| | | 0 - Authentication has not begun properly or has been interrupted. |
| | | 1 - Authentication is valid and is progressing properly and uninterrupted. |
| 4 | AFEXIT | Authentication Firmware Exit |
| | | A write one to clear status bit. In the event authentication has begun properly but has had an improper exit before completion, this bit will be set. This can only occur on an exit from secure entry mode back to open mode. |
| | | 0 - No improper exit has been made while executing authentication firmware. |
| | | 1 - An improper exit from authentication firmware has been made. |
| 7:5 | SECSTAT | Secure Status |
| | | Read/write bits to pass a status back to the handler in the event an authentication has failed. |

Alterations, modifications, and improvements that will readily occur to those skilled in the art are intended to be within the scope of the invention. Accordingly, the foregoing description is by way of example only and is not intended as limiting. The invention is limited only as defined in the following claims and the equivalents thereto.

## Claims

1. A processor configured to operate in a plurality of modes including a secure mode, the secure mode providing secure access to resources of the processor, the processor comprising:
a memory configured to store messages and firmware code;
an emulating-mode enable register bit configured, using a second message comprising code to be debugged, to indicate one of a first processor state wherein private emulation instructions are to be executed and a second processor state wherein private emulation instructions are to be ignored;
a emulation-mode-override register bit, settable in a first entry into the secure mode using a first message comprising an enable code, configured to indicate whether the emulation-mode enable register bit controls entry of the first processor state or the second processor state upon a second entry into the secure mode; and
a logic unit configured to execute the firmware code to authenticate the second message outside the secure mode and, upon successful authentication of the second message, set the emulation-mode-enable register bit in accordance with the emulation-mode-override register bit and enter the secure mode.

2. The processor of claim 1, wherein:
the emulation-mode-override register bit is writable only in the first entry into the secure mode.

3. The processor of claim 2, wherein the message comprises a code to be debugged and the logic unit is further configured to execute the code to be debugged after the second entry into the secure mode.

4. The processor of claim 3, wherein emulation-enable code, when executed after the first entry into secure mode, sets the emulation-mode-override register bit.

5. The processor of claim 1, further comprising a debug port operably configured to receive a private emulation instruction and provide the private emulation instruction to the logic unit, wherein the logic unit is configured to execute the private emulation instruction in accordance with the emulation-mode-enable register bit.

6. The processor of claim 1, wherein the debug port and private emulation instructions are in compliance with the JTAG standard.

7. The processor of claim 1, wherein:
the memory is further configured to store a public key;
the firmware code comprises computer-executable instructions that, when executed by the logic unit, authenticate the message by performing a method comprising:
determining a hash value from the message;
decrypting the digital signature with a public key; and
comparing the decrypted digital signature with the hash value.

8. The processor of claim 1, further comprising a private memory area accessible only in the secure mode.

9. The processor of claim 1, further comprising a program counter to store a memory address of an instruction executable by the logic unit, wherein the logic unit, while executing the firmware code, is configured to abort execution of the firmware code if the memory address stored in the program counter does not correspond to a memory address of the firmware code.

10. A method of operating a microprocessor, the microprocessor operable in a plurality of modes including a secure mode, the method comprising acts of:
(a) entering the secure mode upon successful authentication of a first message comprising a emulation-enable instruction;
(b) executing the emulation-enable instruction, thereby setting an emulation-mode status;
(c) exiting the secure mode;
(d) re-entering the secure mode upon successful authentication of a second message comprising code to be debugged;
(e) enabling, based on the emulation-mode status, an emulation mode indicating emulation instructions are to be executed; and
(f) executing the emulation instruction.

11. The method of claim 10, wherein executing the emulation-enable instruction comprises executing a setup code configured to write the emulation-mode status to a register, the emulation-mode status indicating emulation instructions are to be executed after re-entering the secure mode.

12. The method of claim 10, wherein the second message further comprises target code executable by the microprocessor, and wherein the method further comprises:
(g) executing, after re-entering the secure mode, the target code; and
(h) executing the target code upon execution of the emulation instruction.

13. The method of claim 10, wherein entering the source code further comprises:
determining a hash value for the first message;
decrypting a digital signature with a public key; and
comparing the decrypted signature with the hash value.

14. The method of claim 13, wherein the hash value is determined using a the SHA-1 hashing algorithm, and the digital signature is decrypted using an elliptic curve cipher.

15. The method of claim 10, wherein entering the secure mode further comprises selectively enabling access to a private memory based on a value stored in a register.

## Patentansprüche

1. Prozessor, der konfiguriert ist, in mehreren Betriebsarten einschließlich einer sicheren Betriebsart zu arbeiten, wobei die sichere Betriebsart einen sicheren Zugriff auf Betriebsmittel des Prozessors bereitstellt, wobei der Prozessor Folgendes umfasst:
einen Speicher, der konfiguriert ist, Nachrichten und Firmware-Code zu speichern;
ein Emulationsbetriebsartfreigabe-Registerbit, das konfiguriert ist, unter Verwendung einer zweiten Nachricht, die auszutestenden Code enthält, einen ersten Prozessorzustand, in dem Privatemulationsbefehle auszuführen sind, oder einen zweiten Prozessorzustand, in dem Privatemulationsbefehle zu ignorieren sind, anzugeben;
ein Emulationsbetriebsartüberschreib-Registerbit, das in einem ersten Eintritt in die sichere Betriebsart unter Verwendung einer ersten Nachricht, die einen Freigabe-Code enthält, gesetzt werden kann und konfiguriert ist, anzugeben, ob das Emulationsbetriebsartfreigabe-Registerbit den Eintritt des ersten Prozessorzustands oder des zweiten Prozessorzustands bei einem zweiten Eintritt in die sichere Betriebsart steuert; und
eine Logikeinheit, die konfiguriert ist, den Firmware-Code auszuführen, um die zweite Nachricht außerhalb der sicheren Betriebsart zu authentifizieren und um bei erfolgreicher Authentifizierung der zweiten Nachricht das Emulationsbetriebsartfreigabe-Registerbit in Übereinstimmung mit dem Emulationsbetriebsartüberschreib-Registerbit zu setzen und in die sichere Betriebsart einzutreten.

2. Prozessor nach Anspruch 1, wobei:
das Emulationsbetriebsartüberschreib-Registerbit nur in dem ersten Eintritt in die sichere Betriebsart geschrieben werden kann.

3. Prozessor nach Anspruch 2, wobei die Nachricht einen auszutestenden Code enthält und die Logikeinheit fernrer konfiguriert ist, den auszutestenden Code nach dem zweiten Eintritt in die sichere Betriebsart auszuführen.

4. Prozessor nach Anspruch 3, wobei der Emulationsfreigabe-Code dann, wenn er nach dem ersten Eintritt in die sichere Betriebsart ausgeführt wird, das Emulationsbetriebsartüberschreib-Registerbit setzt.

5. Prozessor nach Anspruch 1, der ferner einen Austest-Port umfasst, der betriebstechnisch konfiguriert ist, einen Privatemulationsbefehl zu empfangen und den Privatemulationsbefehl für die Logikeinheit bereitzustellen, wobei die Logikeinheit konfiguriert ist, den Privatemulationsbefehl in Übereinstimmung mit dem Emulationsbetriebsartfreigabe-Registerbit auszuführen.

6. Prozessor nach Anspruch 1, wobei der Austest-Port und Privatemulationsbefehle in Übereinstimmung mit der JTAG-Norm sind.

7. Prozessor nach Anspruch 1, wobei:
der Speicher ferner konfiguriert ist, einen öffentlichen Schlüssel zu speichern;
der Firmware-Code computerausführbare Befehle enthält, die dann, wenn sie durch die Logikeinheit ausgeführt werden, die Nachricht durch Ausführen eines Verfahrens authentifizieren, das Folgendes umfasst:
Bestimmen eines Hash-Werts aus der Nachricht;
Entschlüsseln der digitalen Signatur mit einem öffentlichen Schlüssel; und
Vergleichen der entschlüsselten digitalen Signatur mit dem Hash-Wert.

8. Prozessor nach Anspruch 1, der ferner einen privaten Speicherbereich umfasst, auf den nur in der sicheren Betriebsart zugegriffen werden kann.

9. Prozessor nach Anspruch 1, der ferner einen Programmzähler umfasst, um eine Speicheradresse eines durch die Logikeinheit ausführbaren Befehls zu speichern, wobei die Logikeinheit, während sie den Firmware-Code ausführt, konfiguriert ist, die Ausführung des Firmware-Codes abzubrechen, falls die in dem Programmzähler gespeicherte Speicheradresse keiner Speicheradresse des Firmware-Codes entspricht.

10. Verfahren zum Betreiben eines Mikroprozessors, wobei der Mikroprozessor in mehreren Betriebsarten einschließlich einer sicheren Betriebsart betreibbar ist, wobei das Verfahren die folgenden Schritte umfasst:
(a) Eintreten in die sichere Betriebsart bei erfolgreicher Authentifizierung einer ersten Nachricht, die einen Emulationsfreigabebefehl enthält;
(b) Ausführen des Emulationsfreigabebefehls und dadurch Setzen eines Emulationsbetriebsart-Status;
(c) Verlassen der sicheren Betriebsart;
(d) erneutes Eintreten in die sichere Betriebsart bei erfolgreicher Authentifizierung einer zweiten Nachricht, die auszutestenden Code enthält;
(e) Freigeben anhand des Emulationsbetriebsart-Status einer Emulationsbetriebsart, die auszuführende Emulationsbefehle angibt; und
(f) Ausführen des Emulationsbefehls.

11. Verfahren nach Anspruch 10, wobei das Ausführen des Emulationsfreigabebefehls das Ausführen eines Einrichtungscodes umfasst, der konfiguriert ist, einen Emulationsbetriebsart-Status in ein Register zu schreiben, wobei der Emulationsbetriebsart-Status angibt, dass Emulationsbefehle nach dem erneuten Eintritt in die sichere Betriebsart auszuführen sind.

12. Verfahren nach Anspruch 10, wobei die zweite Nachricht ferner Zielcode enthält, der durch den Mikroprozessor ausführbar ist, und wobei das Verfahren ferner Folgendes umfasst:
(g) Ausführen des Zielcodes nach dem erneuten Eintreten in die sichere Betriebsart; und
(h) Ausführen des Zielcodes bei Ausführung des Emulationsbefehls.

13. Verfahren nach Anspruch 10, wobei das Eintreten in die sichere Betriebsart ferner Folgendes umfasst:
Bestimmen eines Hash-Werts für die erste Nachricht;
Entschlüsseln einer digitalen Signatur mit einem öffentlichen Schlüssel; und
Vergleichen der entschlüsselten Signatur mit dem Hash-Wert.

14. Verfahren nach Anspruch 13, wobei der Hash-Wert unter Verwendung des SHA-1-Hashing-Algorithmus bestimmt wird und wobei die digitale Signatur unter Verwendung einer Ellipsenkurven-Verschlüsselung entschlüsselt wird.

15. Verfahren nach Anspruch 10, wobei das Eintreten in die sichere Betriebsart ferner das wahlweise Freigeben des Zugriffs auf einen privaten Speicher anhand eines in einem Register gespeicherten Werts umfasst.

## Revendications

1. Processeur configuré pour fonctionner selon une pluralité de modes, comprenant un mode sécurisé, le mode sécurisé offrant un accès sécurisé à des ressources du processeur, le processeur comprenant :
- une mémoire configurée pour stocker des messages et un code de progiciel ;
- un bit de registre d'autorisation de mode d'émulation configuré, en utilisant un second message contenant un code à déboguer, pour indiquer un parmi un premier état de processeur dans lequel des instructions d'émulation privées doivent être exécutées, et un second état de processeur dans lequel des instructions d'émulation privées doivent être ignorées ;
- un bit de registre de prise de contrôle de mode d'émulation, déterminable lors d'une première entrée en mode sécurisé en utilisant un premier message contenant un code d'autorisation, configuré pour indiquer si le bit de registre de prise de contrôle de mode d'émulation commande l'entrée du premier état de processeur ou du second état de processeur lors d'une seconde entrée en mode sécurisé ; et
- une unité logique configurée pour exécuter le code de progiciel afin d'authentifier le second message à l'extérieur du mode sécurisé et, lors d'une authentification réussie du second message, afin de déterminer le bit de registre d'autorisation de mode d'émulation conformément au bit de registre de prise de contrôle du mode d'émulation et d'entrer en mode sécurisé.

2. Processeur selon la revendication 1, dans lequel le bit de registre de prise de contrôle de mode d'émulation est inscriptible uniquement dans une première entrée en mode sécurisé.

3. Processeur selon la revendication 2, dans lequel le message comprend un code à déboguer, et l'unité logique est en outre configurée de manière à exécuter le code à déboguer après la seconde entrée en mode sécurisé.

4. Processeur selon la revendication 3, dans lequel le code d'autorisation d'émulation, lorsqu'il est exécuté après la première entrée en mode sécurisé, détermine le bit de registre de prise de contrôle de mode d'émulation.

5. Processeur selon la revendication 1, comprenant en outre un port de débogage qui est configuré de façon opérationnelle pour recevoir une instruction d'émulation privée et communiquer l'instruction d'émulation privée à l'unité logique, dans lequel l'unité logique est configurée de manière à exécuter l'instruction d'émulation privée conformément au bit de registre d'autorisation de mode d'émulation.

6. Processeur selon la revendication 1, dans lequel le port de débogage et les instructions d'émulation privées sont conformes à la norme JTAG.

7. Processeur selon la revendication 1, dans lequel :
- la mémoire est en outre configurée pour stocker une clé publique ;
- le code de progiciel comprend des instructions exécutables par ordinateur qui, lorsqu'elles sont exécutées par l'unité logique, authentifient le message en exécutant le procédé comprenant les étapes suivantes :
• détermination d'une valeur de hachage à partir du message;
• décryptage de la signature numérique à l'aide d'une clé publique ; et
• comparaison de la signature numérique décryptée avec la valeur de hachage.

8. Processeur selon la revendication 1, comprenant en outre une zone de mémoire privée accessible uniquement en mode sécurisé.

9. Processeur selon la revendication 1, comprenant en outre un compteur de programme pour stocker une adresse de mémoire d'une instruction exécutable par l'unité logique, dans lequel l'unité logique, alors qu'il exécute le code de progiciel, est configurée pour arrêter prématurément l'exécution du code de progiciel si l'adresse de mémoire qui est stockée dans le compteur de programme ne correspond pas à une adresse de mémoire du code de progiciel.

10. Procédé de fonctionnement d'un microprocesseur, le microprocesseur pouvant fonctionner selon une pluralité de modes, comprenant un mode sécurisé, le procédé comprenant les étapes suivantes :
(a) entrée en mode sécurisé lors de l'authentification réussie d'un premier message contenant une instruction d'autorisation d'émulation ;
(b) exécution l'instruction d'autorisation d'émulation, déterminant de ce fait un statut de mode d'émulation ;
(c) sortie du mode sécurisé ;
(d) entrée à nouveau en mode sécurisé lors de l'authentification réussie d'un second message contenant le code à déboguer ;
(e) autorisation, sur la base du statut de mode d'émulation, un mode d'émulation indiquant les instructions d'émulation qui doivent être exécutées ; et
(f) exécution de l'instruction d'émulation.

11. Procédé selon la revendication 10, dans lequel l'exécution de l'instruction d'autorisation d'émulation comprend l'exécution d'un code de configuration configuré pour écrire le statut de mode d'émulation dans un registre, le statut de mode d'émulation indiquant les instructions d'émulation qui doivent être exécutées après être entré à nouveau en mode sécurisé.

12. Procédé selon la revendication 10, dans lequel le second message comprend en outre un code cible exécutable par le microprocesseur, et dans lequel le procédé comprend en outre les étapes suivantes :
(g) exécution du code cible après être entré à nouveau en mode sécurisé; et
(h) exécution du code cible lors de l'exécution de l'instruction d'émulation.

13. Procédé selon la revendication 10, dans lequel l'entrée du code source comprend en outre les étapes suivantes :
- détermination d'une valeur de hachage pour le premier message ;
- décryptage d'une signature numérique à l'aide d'une clé publique ; et
- comparaison de la signature décryptée avec la valeur de hachage.

14. Procédé selon la revendication 13, dans lequel la valeur de hachage est déterminée en utilisant l'algorithme de hachage SHA-1, et la signature numérique est décryptée en utilisant un chiffre de courbe elliptique.

15. Procédé selon la revendication 10, dans lequel l'entrée en mode sécurisé comprend l'autorisation sélective d'accéder à une mémoire privée sur la base d'une valeur stockée dans un registre.
